# EUROPEAN PATENT APPLICATION

(11) **EP 4 497 641 A1**
(43) Date of publication of application: **29.01.2025**
(21) Application number: 24190369.9
(22) Date of filing: 23.07.2024
(51) Int. Cl.: B60T 13/66, B60T 17/08, B60T 17/22, B61H 1/00, F16D 49/16, F16D 65/18, B61H 13/34, F16D 65/00

(54) **UNIT BRAKE DEVICE**

(30) Priority: 27.07.2023 JP 2023122417
(71) Applicant: NABTESCO CORPORATION, Chiyoda-ku Tokyo 102-0093 (JP)
(72) Inventor: Shibata, Kazuki, Chiyoda-ku, Tokyo, 102-0093 (JP); Ihara, Kazumasa, Chiyoda-ku, Tokyo, 102-0093 (JP)
(74) Representative: Grünecker Patent- und Rechtsanwälte PartG mbB

(57) **Abstract**

Provided is a unit brake device (1, 101, 111) that can be mounted in a simplified manner as the need of temporarily mounting the unit brake device (1, 101, 111) is eliminated.

A unit brake device (1) includes: a brake cylinder (20) configured to be driven by compressed air fed through a bogie-side pipe (16) fixedly attached onto a bogie; a pressing unit configured to be driven by the brake cylinder (20) and to press a brake shoe 2 against a tread of a wheel of the bogie; a body (31) covering the pressing unit; a bogie-side attachment structure (10) to which the body (31) is to be attached with the bogie-side attachment structure (10) being fixedly attached onto the bogie, the bogie-side attachment structure (10) having a bogie-side connection port (13) to which the bogie-side pipe (16) is connected; and a brake-side pipe (26) configured to establish connection between an air inlet (20A) of the brake cylinder (20) and the bogie-side connection port (13). The brake-side pipe (26) is fixedly attached onto the body (31) such that the brake-side pipe (26) establishes the connection between the air inlet (20A) and the bogie-side connection port (13) upon attaching the body (31) onto the bogie-side attachment structure (10).

## Description

### TECHNICAL FIELD

The present invention relates to a unit brake device.

### BACKGROUND

Patent Literature 1 discloses a unit brake device including a brake cylinder and a brake shoe. The unit brake device is configured to brake a wheel by causing the brake cylinder to press the brake shoe against the tread of the wheel. The unit brake device is mounted on a bogie. The air pressure cylinder is connected to a pipe through which compressed air is supplied.

### RELEVANT REFERENCE

### LIST OF RELEVANT PATENT LITERATURE

Patent Literature 1: Japanese Patent Application Publication No. 2021-183855

### SUMMARY

To mount the unit brake device described above onto the bogie, it is required to check the position of the air inlet of the brake cylinder of the unit brake device while the unit brake device is attached onto the bogie. This needs to be done to deal with the manufacturing error of the bogie and the bending error of the pipe to be connected to the air inlet of the brake cylinder. Since there is only a small gap between the beam of the bogie and the unit brake device, however, the pipe cannot be welded onto the bogie while the unit brake device is attached onto the bogie. Therefore, the attached unit brake device is temporarily removed to weld the pipe. After the welding is completed, the unit brake device is attached onto the bogie again. Thus, a cumbersome series of steps is required to mount the unit brake device onto the bogie.

The above-described problem may be solved by a unit brake device including: a brake cylinder configured to be driven by compressed air fed through a bogie-side pipe fixedly attached onto a bogie; a pressing unit configured to be driven by the brake cylinder and to press a brake shoe against a tread of a wheel of the bogie; a body covering the pressing unit; a bogie-side attachment structure to which the body is to be attached with the bogie-side attachment structure being fixedly attached onto the bogie, the bogie-side attachment structure having a bogie-side connection port to which the bogie-side pipe is connected; and a brake-side pipe configured to establish connection between an air inlet of the brake cylinder and the bogie-side connection port. The brake-side pipe is fixedly attached onto the body such that the brake-side pipe establishes the connection between the air inlet and the bogie-side connection port upon attaching the body onto the bogie-side attachment structure.

In the implementation, as the body is attached onto the bogie-side attachment structure, the brake-side pipe, which is fixedly attached onto the body and connected to the air inlet of the brake cylinder, can establish connection with the bogie-side connection port of the bogie-side attachment structure. Therefore, it is only the bogie-side attachment structure that needs to be fixedly attached onto the bogie in order to place the bogie-side connection port, to which the bogie-side pipe is connected, at a fixed position relative to the bogie. The implementation eliminates the need of attaching the entire unit brake device onto the bogie. Attaching the body onto the bogie-side attachment structure can establish connection between the brake-side pipe and the bogie-side connection port of the bogie-side attachment structure. In this manner, the brake-side pipe can be successfully connected to the bogie-side pipe. The bogie-side pipe can be installed without requiring that the unit brake device be temporarily attached for the purpose of determining the position of the pipe relative to the bogie. Accordingly, the unit brake device can be mounted in a simplified manner.

In one embodiment of the unit brake device, the body may have a brake-side attachment structure to which the bogie-side attachment structure is to be attached, the brake-side attachment structure may have a brake-side connection port for establishing connection between the bogie-side connection port and the brake-side pipe, and an attaching surface where the bogie-side attachment structure and the brake-side attachment structure are to be attached may be flush with a connecting surface where the bogie-side connection port and the brake-side connection port are to be connected.

In one embodiment of the unit brake device, the brake-side connection port may be provided in a portion of the brake-side attachment structure that projects laterally from the body. In one embodiment of the unit brake device, the body may include a pipe holder securing the brake-side pipe.

In one embodiment of the unit brake device, the brake cylinder may include a service brake cylinder and a parking brake cylinder. The bogie-side pipe may include: a bogie-side service brake pipe through which compressed air is fed to the service brake cylinder; and a bogie-side parking brake pipe through which compressed air is fed to the parking brake cylinder. The bogie-side attachment structure may include: a service brake connection port to which the bogie-side service brake pipe is connected; and a parking brake connection port to which the bogie-side parking brake pipe is connected. The brake-side pipe may include: a service-brake pipe for establishing connection between an air inlet of the service brake cylinder and a connection port of the bogie-side service brake pipe; and a parking-brake pipe for establishing connection between an air inlet of the parking brake cylinder and a connection port of the bogie-side parking brake pipe.

The above-described problems can be solved by a unit brake device including: a brake cylinder configured to be driven by compressed air fed through a bogie-side pipe fixedly attached onto a bogie; a pressing unit configured to be driven by the brake cylinder and to press a brake shoe against a tread of a wheel of the bogie; a body covering the pressing unit; and a brake-side pipe for establishing connection between an air inlet of the brake cylinder and a bogie-side connection port to which the bogie-side pipe is connected. The brake-side pipe is fixedly attached onto the body.

In the implementation, the brake-side pipe, which is fixedly attached onto the body and connected to the air inlet of the brake cylinder, can establish connection with the bogie-side connection port. Therefore, it is only the bogie-side pipe that needs to be fixedly attached onto the bogie in order to place the bogie-side connection port, to which the bogie-side pipe is connected, at a fixed position relative to the bogie. The present embodiment eliminates the need of attaching the entire unit brake device onto the bogie. Attaching the body onto the bogie can establish connection between the brake-side pipe and the bogie-side connection port. In this manner, the brake-side pipe can be successfully connected to the bogie-side pipe. The bogie-side pipe can be installed without requiring that the unit brake device be temporarily attached for the purpose of determining the position of the pipe relative to the bogie. Accordingly, the unit brake device can be mounted in a simplified manner.

### ADVANTAGEOUS EFFECTS

The present invention can provide a unit brake device that can be mounted in a simplified manner as a bogie-side pipe can be installed without requiring that the unit brake device be temporarily mounted.

### BRIEF DESCRIPTION OF THE DRAWINGS

Fig. 1 is a sectional view schematically showing a configuration of a unit brake device relating to a first embodiment.
Fig. 2 is a rear view showing the configuration of a bogie-side attachment structure of the unit brake device relating to the first embodiment.
Fig. 3 is a side view showing the configuration of the unit brake device according to the first embodiment.
Fig. 4 is an enlarged sectional view showing the configuration of a brake-side attachment structure of the unit brake device relating to the first embodiment.
Fig. 5 is a front view showing the configuration of the unit brake device relating to the first embodiment.
Fig. 6 is a side view showing how the unit brake device relating to the first embodiment may be mounted onto a bogie.
Fig. 7 is a side view showing a configuration of a unit brake device relating to a second embodiment.
Fig. 8 is a front view showing the configuration of the unit brake device relating to the second embodiment.
Fig. 9 is a front view showing the configuration of a modified unit brake device.
Fig. 10 is a front view showing the configuration of a modified unit brake device.
Fig. 11 is a side view showing the configuration of a unit brake device relating to a third embodiment.
Fig. 12 is a front view showing the configuration of the unit brake device relating to the third embodiment.

### DESCRIPTION OF THE PREFERRED EMBODIMENTS

### <First Embodiment>

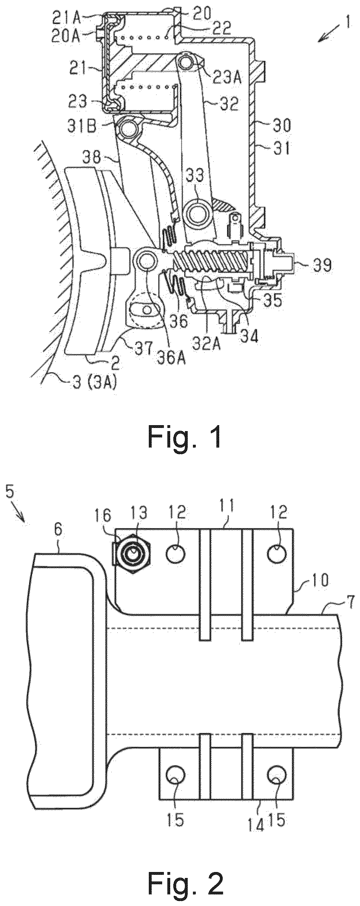

With reference to Figs. 1 to 6, the following describes a unit brake device according to a first embodiment. A unit brake device is attached to a bogie of a railway vehicle and configured to brake the railway vehicle by pressing its brake shoe against the wheel tread.

### <Unit Brake Device 1>

As shown in Fig 1, the unit brake device 1 includes an air brake cylinder 20 for outputting a brake force by means of air. The unit brake device 1 includes a transmission drive unit 30 for transmitting the brake force output from the air brake cylinder 20 to a shoe head 37. The transmission drive unit 30 has a hollow body 31.

### <Air Brake Cylinder 20>

The air brake cylinder 20 includes a cylinder 21 having a cylindrical shape and a bottom. The cylinder 21 is connected to the left side of the body 31. The air brake cylinder 20 has a spring 22, and a piston 23 to be energized by the spring 22. The piston 23 has an end that protrudes into the body 31 and that is rotatably connected to a brake lever 32 via a connecting pin 23A. The brake lever 32 may rotate on a fulcrum pin 33, which is fixedly attached to the body 31. The brake lever 32 is coupled at one end (the upper end in the drawing) to the piston 23.

The bottom of the cylinder 21 (shown on the left side) has an air inlet 20A through which compressed air is fed into the cylinder 21. The air inlet 20A is provided on the front side of the unit brake device 1. The compressed air is fed to a working chamber 21A defined by the cylinder 21 and the piston 23. Subsequent to the compressed air being fed into the working chamber 21A, the piston 23 of the air brake cylinder 20 moves in such a direction (to the right side) that the piston 23 protrudes out from the cylinder 21, as a result of which the brake lever 32 is rotated clockwise. Subsequent to the compressed air being discharged from the working chamber 21A, on the other hand, the piston 23 of the air brake cylinder 20 is moved by the spring 22 toward the bottom of the cylinder 21 (to the left side), as a result of which the brake lever 32 is rotated anti-clockwise.

### <Transmission Drive Unit 30>

The transmission drive unit 30 includes the above-mentioned brake lever 32, a spherical bearing 34 fitted in a spherical through hole 32A in the other end of the brake lever 32, and a cylindrical collet 35 having an outer peripheral surface on which the spherical bearing 34 is fixedly provided. The transmission drive unit 30 includes a push rod 36 screwed into the collet 35. The base end of the push rod 36 is screwed into and coupled with the collet 35. On the other end of the push rod 36, the shoe head 37 is rotatably attached via a coupling pin 36A. A hanger 38 is rotatably provided on the body 31 via a coupling pin 31B. The shoe head 37 is rotatably attached to the hanger 38 via the coupling pin 36A. The shoe head 37 has a brake shoe 2 attached thereto, which is to be pressed against a tread 3A of a wheel 3 of a railway vehicle. The brake lever 32, collet 35, and push rod 36 together serve as a pressing unit configured to press the brake shoe 2 against the tread of the wheel 3.

When the brake lever 32 turns clockwise on the fulcrum pin 33, the brake shoe 2 is, together with the collet 35 and the push rod 36, pushed toward the tread 3A of the wheel 3, so that the brake shoe 2 is pressed against the tread 3A of the wheel 3. This can brake the rotation of the wheel 3. When the brake lever 32 is rotated by the air brake cylinder 20 clockwise, the degree at which the brake shoe 2 is pressed against the tread 3A of the wheel 3, in other words, the abrasion amount increases as the amount of the rotation increases. When the brake lever 32 turns anti-clockwise on the fulcrum pin 33, on the other hand, the brake shoe 2 is, together with the collet 35 and the push rod 36, moved away from the tread 3A of the wheel 3 so that the braking applied on the rotation of the wheel 3 is undone.

### <Bogie-Side Attachment Structure 10>

As shown in Fig. 2, a bogie 5 of a railroad vehicle includes a pair of side frames 6 extending in the longitudinal direction of the railroad vehicle (only one of the side frames 6 is shown), and a transverse beam 7 bridging the side frames 6. On the transverse beam 7 of the bogie 5, a bogie-side pipe 16 is fixedly attached to feed compressed air from an air source. The unit brake device 1 includes a bogie-side attachment structure 10 fixedly attached onto the bogie 5. The body 31 may be attached onto the bogie-side attachment structure 10. The bogie-side attachment structure 10 includes an upper attachment plate 11 and a lower attachment plate 14. The upper attachment plate 11 of the bogie-side attachment structure 10 has two upper bolt holes 12 and a bogie-side connection port 13. The upper bolt holes 12 can receive bolts. The bogie-side connection port 13 of the bogie-side attachment structure 10 is connected to the bogie-side pipe 16. The lower attachment plate 14 of the bogie-side attachment structure 10 has two lower bolt holes 15. The lower bolt holes 15 can receive bolts. The upper and lower attachment plates 11 and 14 may constitute a single piece or separate pieces as long as they can be fixed onto the bogie 5.

### <Brake-side pipe 26>

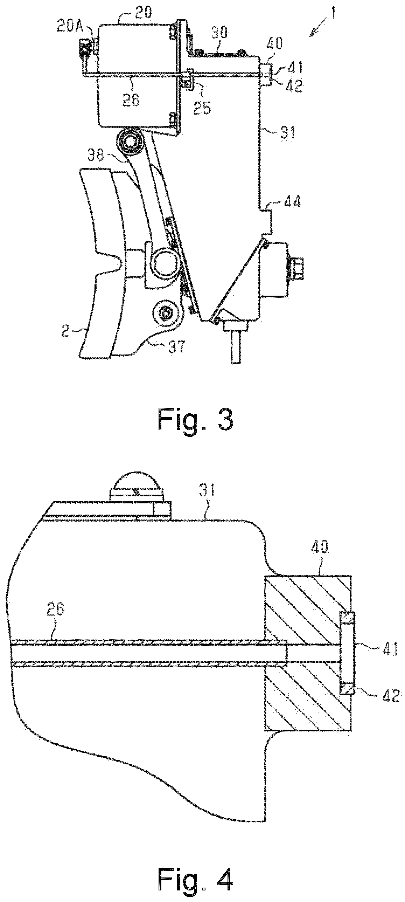

As shown in Fig 3, the unit brake device 1 includes a brake-side pipe 26. The brake-side pipe 26 connects the air inlet 20A of the air brake cylinder 20 to an upper brake-side attachment structure 40. The brake-side pipe 26 is fixedly attached onto the body 31 such that it can connect the air inlet 20A to the bogie-side connection port 13 upon attaching the body 31 onto the bogie-side attachment structure 10. The body 31 includes a pipe holder 25 for securing the brake-side pipe 26. The pipe holder 25 is fixedly attached onto the outer surface of the body 31 and may support the brake-side pipe 26. The brake-side pipe 26 is held at three points, namely, the air inlet 20A, the pipe holder 25 and the upper brake-side attachment structure 40.

### <Upper Brake-Side Attachment Structure 40>

As shown in Fig. 4, the body 31 has the upper brake-side attachment structure 40, which is to be attached onto the bogie-side attachment structure 10. The upper brake-side attachment structure 40 has a brake-side connection port 41. The brake-side connection port 41 has an annular ring gasket 42. The ring gasket 42 protrudes beyond the surface of the upper brake-side attachment structure 40 and is to be squashed when the upper brake-side attachment structure 40 is attached onto the bogie-side attachment structure 10. The brake-side connection port 41 can establish connection between the bogie-side connection port 13 and the brake-side pipe 26.

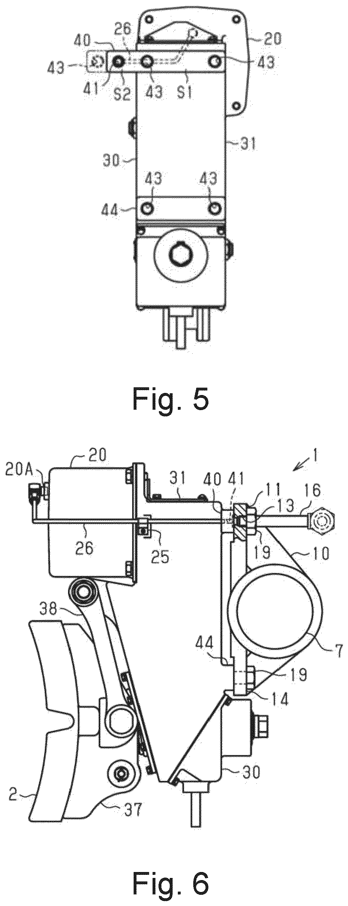

As shown in Fig. 5, the upper brake-side attachment structure 40 has two threaded holes 43. Bolts can be tightened into the threaded holes 43. The brake-side connection port 41 is provided in a portion of the upper brake-side attachment structure 40 that projects laterally (to the left) from the body 31. The upper brake-side attachment structure 40 projects laterally from the body 31. The projecting portion has the brake-side connection port 41. The body 31 has a lower brake-side attachment structure 44. The lower brake-side attachment structure 44 has two threaded holes 43.

An attaching surface S1 where the bogie-side attachment structure 10 and the upper brake-side attachment structure 40 are attached is flush with a connecting surface S2 where the bogie-side connection port 13 and the brake-side connection port 41 are connected. The attaching surface S1 is the surface of the upper brake-side attachment structure 40 where the threaded holes 43 are provided. The connecting surface S2 is the surface of the upper brake-side attachment structure 40 where the brake-side connection port 41 is provided. The attaching surface S1 and connecting surface S2 are part of the same surface of the upper brake-side attachment structure 40.

### <Operation>

The following now describes how the above-described unit brake device 1 is mounted, with reference to Fig. 6. As shown in Fig. 6, the bogie-side attachment structure 10 is fixedly attached onto the transverse beam 7 of the bogie 5. The upper attachment plate 11 of the bogie-side attachment structure 10 has the bogie-side connection port 13. The bogie-side connection port 13 is connected to the bogie-side pipe 16. The position of the bogie-side pipe 16 is determined independently from how the unit brake device 1 is mounted.

The unit brake device 1 is mounted onto the bogie-side attachment structure 10. While the bogie-side attachment structure 10 is fixedly attached onto the bogie 5, the body 31 is mounted onto the bogie-side attachment structure 10. The threaded holes 43 of the upper brake-side attachment structure 40 are aligned with the upper bolt holes 12 of the upper attachment plate 11 of the bogie-side attachment structure 10, and the threaded holes 43 of the lower brake-side attachment structure 44 are aligned with the lower bolt holes 15 of the lower attachment plate 14 of the bogie-side attachment structure 10. Bolts 19 are inserted into the upper bolt holes 12 from the rear side of the bogie-side attachment structure 10 and tightened into the threaded holes 43 of the upper brake-side attachment structure 40. Bolts 19 are inserted into the lower bolt holes 15 from the rear side of the bogie-side attachment structure 10 and tightened into the threaded holes 43 of the lower brake-side attachment structure 44.

With the body 31 being attached onto the bogie-side attachment structure 10, the ring gasket 42 of the brake-side connection port 41 is pressed against the bogie-side connection port 13, so that tight seal can be established between the brake-side connection port 41 and the bogie-side connection port 13. The brake-side pipe 26 thus connects the air inlet 20A of the air brake cylinder 20 to the bogie-side connection port 13. Being connected to the bogie-side connection port 13, the brake-side pipe 26 can constitute the pipe of the unit brake device 1 as long as the bogie-side pipe 16 is provided on the bogie-side attachment structure 10. No pipe needs to be fixed onto the side frames 6 of the bogie 5.

Advantageous effects of the first embodiment will be now described.
(1-1) As the body 31 is attached onto the bogie-side attachment structure 10, the brake-side pipe 26, which is fixedly attached onto the body 31 and connected to the air inlet 20A of the air brake cylinder 20, can establish connection with the bogie-side connection port 13 of the bogie-side attachment structure 10. Therefore, it is only the bogie-side attachment structure 10 that needs to be fixedly attached onto the bogie 5 in order to place the bogie-side connection port 13, to which the bogie-side pipe 16 is connected, at a fixed position relative to the bogie 5. The present embodiment eliminates the need of attaching the entire unit brake device 1 onto the bogie 5. Attaching the body 31 onto the bogie-side attachment structure 10 can establish connection between the brake-side pipe 26 and the bogie-side connection port 13 of the bogie-side attachment structure 10. In this manner, the brake-side pipe 26 can be successfully connected to the bogie-side pipe 16. The bogie-side pipe can be installed without requiring that the unit brake device 1 be temporarily attached for the purpose of determining the position of the pipe relative to the bogie 5. Accordingly, the unit brake device 1 can be mounted in a simplified manner.
(1-2) The attaching surface S1 where the bogie-side attachment structure 10 and the upper brake-side attachment structure 40 are attached may be at a different level than the connecting surface S2 where the bogie-side connection port 13 and the brake-side connection port 41 are connected. If such is the case, any manufacturing errors can compromise the air tightness between the bogie-side connection port 13 and the brake-side connection port 41. According to the first embodiment, the attaching surface S1 is flush with the connecting surface S2. Manufacturing errors may occur but do not impair the air tightness between the bogie-side connection port 13 and the brake-side connection port 41.
(1-3) The brake-side connection port 41 is provided in the portion that projects laterally from the body 31. This facilitates handling of the brake-side pipe 26. (1-4) The body 31 includes the pipe holder 25 for securing the brake-side pipe 26. The brake-side pipe 26 is secured on the body 31, rather than on the air brake cylinder 20. This means that the brake-side pipe 26 is secured at a site at a short distance from the brake-side connection port 41. The brake-side pipe 26 can be thus stably supported.

### <Second Embodiment>

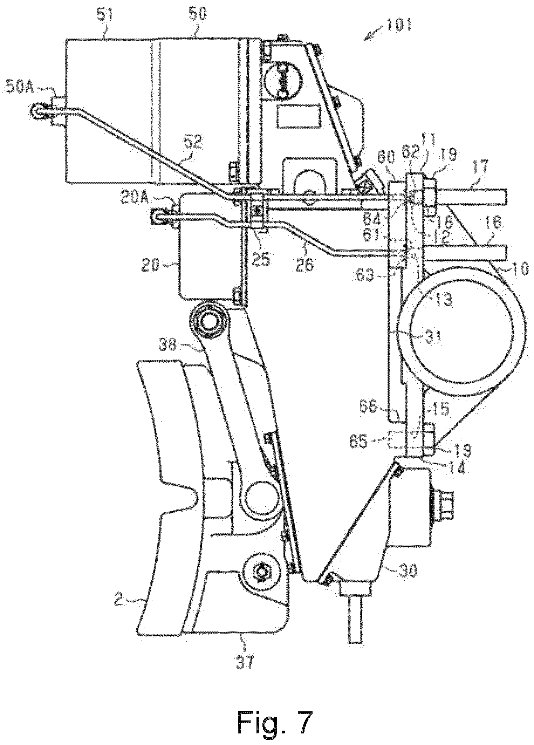

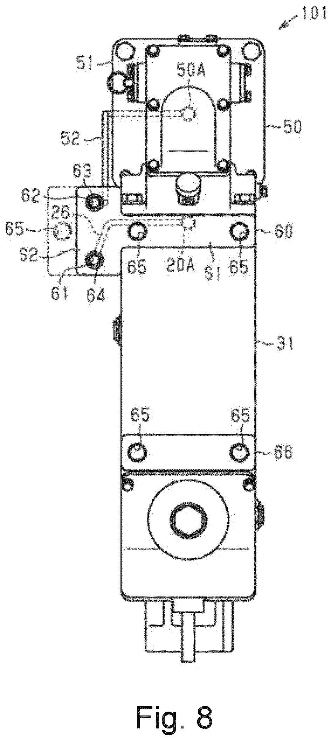

With reference to Figs. 7 and 8, the following now describes a unit brake device according to a second embodiment. The second embodiment is different from the first embodiment in that the unit brake device further includes a parking brake cylinder. The following description will be focused on the differences between the first and second embodiments.

### <Unit Brake Device 101>

As shown in Fig 7, a unit brake device 101 includes the air brake cylinder 20 for outputting a brake force by means of air and additionally includes a spring brake cylinder 50 serving as a parking brake. The unit brake device 101 can transmit to the shoe head 37 a brake force output from the air brake cylinder 20 and spring brake cylinder 50. The air brake cylinder 20 serves as a service brake cylinder, and the spring brake cylinder 50 serves as a parking brake cylinder.

### <Spring Brake Cylinder 50>

The spring brake cylinder 50 includes a cylinder 51 having a cylindrical shape and a bottom. The cylinder 51 is connected to the upper side of the body 31. The spring brake cylinder 50 may generate a brake force by causing a brake spring (not shown) to energize a piston and output the generated brake force to the brake lever 32. As a result, the brake lever 32 may rotate clockwise. The bottom of the cylinder 51 (shown on the left side) has an air inlet 50A through which compressed air is fed into the cylinder 51. With the compressed air being fed through the air inlet 50A, the piston compresses the brake spring. This may stop the brake spring from applying the brake force. As a result, the brake lever 32 rotates anti-clockwise.

### <Bogie-Side Attachment Structure 10>

On the transverse beam 7 of the bogie 5, the first bogie-side pipe 16 is fixedly attached, and a second bogie-side pipe 17 is additionally fixedly attached to feed compressed air to the spring brake cylinder 50. The first bogie-side pipe 16 is equivalent to the bogie-side pipe 16 relating to the first embodiment. The unit brake device 101 includes the bogie-side attachment structure 10 to be fixedly attached onto the bogie 5. The body 31 is attached onto the bogie-side attachment structure 10. The bogie-side attachment structure 10 includes the upper attachment plate 11 and the lower attachment plate 14. The upper attachment plate 11 of the bogie-side attachment structure 10 has the two upper bolt holes 12, a first bogie-side connection port 13 and a second bogie-side connection port 18. The upper bolt holes 12 can receive the bolts 19. The first bogie-side connection port 13 is connected to the first bogie-side pipe 16. The second bogie-side connection port 18 is connected to the second bogie-side pipe 17. The lower attachment plate 14 of the bogie-side attachment structure 10 has the two lower bolt holes 15. The lower bolt holes 15 can receive the bolts 19. The first bogie-side pipe 16 is equivalent to a bogie-side service brake pipe, and the second bogie-side pipe 17 is equivalent to a bogie-side parking brake pipe. The first bogie-side connection port 13 is equivalent to a service brake connection port, and the second bogie-side connection port 18 is equivalent to a parking brake connection port. The upper and lower attachment plates 11 and 14 may constitute a single piece or separate pieces as long as they can be fixed onto the bogie 5.

### <First Brake-side pipe 26 and Second Brake-side pipe 52>

The unit brake device 101 includes a first brake-side pipe 26 and additionally includes a second brake-side pipe 52 through which the compressed air is fed to the spring brake cylinder 50. The first brake-side pipe 26 is equivalent to the brake-side pipe 26 relating to the first embodiment. The second brake-side pipe 52 connects the air inlet 50A of the spring brake cylinder 50 to an upper brake-side attachment structure 60. The second brake-side pipe 52 is fixedly attached onto the body 31 such that it can connect the air inlet 50A to the second bogie-side connection port 18 upon attaching the body 31 onto the bogie-side attachment structure 10. The pipe holder 25 is fixedly attached onto the outer surface of the body 31 and may support the second brake-side pipe 52. The second brake-side pipe 52 is held at three points, namely, the air inlet 50A, the pipe holder 25 and the upper brake-side attachment structure 60. The first brake-side pipe 26 is equivalent to a service brake pipe, and the second brake-side pipe 52 is equivalent to a parking brake pipe.

### <Upper Brake-Side Attachment Structure 60>

As shown in Fig. 8, the body 31 has the upper brake-side attachment structure 60 to which the bogie-side attachment structure 10 may be attached. The upper brake-side attachment structure 60 has a first brake-side connection port 61 and a second brake-side connection port 62. The first brake-side connection port 61 has an annular ring gasket 63. The ring gasket 63 protrudes beyond the surface of the upper brake-side attachment structure 60 and is to be squashed when the upper brake-side attachment structure 60 is attached onto the bogie-side attachment structure 10. The first brake-side connection port 61 connects the first bogie-side connection port 13 and the first brake-side pipe 26. The second brake-side connection port 62 has an annular ring gasket 64. The ring gasket 64 protrudes beyond the surface of the upper brake-side attachment structure 60 and is to be squashed when the upper brake-side attachment structure 60 is attached onto the bogie-side attachment structure 10. The second brake-side connection port 62 connects the second bogie-side connection port 18 and the second brake-side pipe 52.

The upper brake-side attachment structure 60 has two threaded holes 65. The bolts 19 can be tightened into the threaded holes 65. The first and second brake-side connection ports 61 and 62 are provided in a portion of the upper brake-side attachment structure 60 that projects laterally (to the left) from the body 31. The upper brake-side attachment structure 60 projects laterally from the body 31. The projecting portion has the first and second brake-side connection ports 61 and 62. The body 31 has a lower brake-side attachment structure 66. The lower brake-side attachment structure 66 has two threaded holes 65.

An attaching surface S1 where the bogie-side attachment structure 10 and the upper brake-side attachment structure 60 are attached is flush with a connecting surface S2 where the first bogie-side connection port 13 and the first brake-side connection port 61 are connected, and with a connecting surface S2 where the second bogie-side connection port 18 and the second brake-side connection port 62 are connected. The attaching surface S1 is the surface of the upper brake-side attachment structure 60 where the threaded holes 65 are provided. The connecting surfaces S2 are the surfaces of the upper brake-side attachment structure 60 where the first and second brake-side connection ports 61 and 62 are provided. The attaching surface S1 and connecting surfaces S2 are part of the same surface of the upper brake-side attachment structure 60.

### <Operation>

The following now describes how the above-described unit brake device 101 is mounted, with reference to Fig. 7.

As shown in Fig. 7, the bogie-side attachment structure 10 is fixedly attached onto the transverse beam 7 of the bogie 5. The upper attachment plate 11 of the bogie-side attachment structure 10 has the first and second bogie-side connection ports 13 and 18. The first bogie-side connection port 13 is connected to the first bogie-side pipe 16. The second bogie-side connection port 18 is connected to the second bogie-side pipe 17. The position of the first and second bogie-side pipes 16 and 17 is determined independently from how the unit brake device 101 is mounted.

The unit brake device 101 is mounted onto the bogie-side attachment structure 10. While the bogie-side attachment structure 10 is fixedly attached onto the bogie 5, the body 31 is mounted onto the bogie-side attachment structure 10. The threaded holes 65 of the upper brake-side attachment structure 60 are aligned with the upper bolt holes 12 of the upper attachment plate 11 of the bogie-side attachment structure 10, and the threaded holes 65 of the lower brake-side attachment structure 66 are aligned with the lower bolt holes 15 of the lower attachment plate 14 of the bogie-side attachment structure 10. The bolts 19 are inserted into the upper bolt holes 12 from the rear side of the bogie-side attachment structure 10 and tightened into the threaded holes 65 of the upper brake-side attachment structure 60. The bolts 19 are inserted into the lower bolt holes 15 from the rear side of the bogie-side attachment structure 10 and tightened into the threaded holes 65 of the lower brake-side attachment structure 66.

With the body 31 being attached onto the bogie-side attachment structure 10, the ring gasket 63 of the first brake-side connection port 61 is pressed against the first bogie-side connection port 13, so that tight seal can be established between the first brake-side connection port 61 and the first bogie-side connection port 13. The first brake-side pipe 26 thus connects the air inlet 20A of the air brake cylinder 20 to the first bogie-side connection port 13. Being connected to the first bogie-side connection port 13, the first brake-side pipe 26 can constitute the pipe of the unit brake device 101 as long as the first bogie-side pipe 16 is provided on the bogie-side attachment structure 10. No pipe needs to be fixed onto the side frames 6 of the bogie 5.

Likewise, with the body 31 being attached onto the bogie-side attachment structure 10, the ring gasket 64 of the second brake-side connection port 62 is pressed against the second bogie-side connection port 18, so that tight seal can be established between the second brake-side connection port 62 and the second bogie-side connection port 18. The second brake-side pipe 52 thus connects the air inlet 50A of the spring brake cylinder 50 to the second bogie-side connection port 18. Being connected to the second bogie-side connection port 18, the second brake-side pipe 52 can constitute the pipe of the unit brake device 101 as long as the second bogie-side pipe 17 is provided on the bogie-side attachment structure 10. No pipe needs to be fixed onto the side frames 6 of the bogie 5.

Advantageous effects of the second embodiment will be now described.
(2-1) Attaching the body 31 onto the bogie-side attachment structure 10 can establish connection between the first brake-side pipe 26 and the first bogie-side connection port 13 of the bogie-side attachment structure 10 and also between the second brake-side pipe 52 and the second bogie-side connection port 18 of the bogie-side attachment structure 10. Therefore, it is only the bogie-side attachment structure 10 that needs to be fixedly attached onto the bogie 5 in order to place the first and second bogie-side connection ports 13 and 18, to which the first and second bogie-side pipes 16 and 17 are connected, at a fixed position relative to the bogie 5. The present embodiment eliminates the need of attaching the entire unit brake device 101 onto the bogie 5. Attaching the body 31 onto the bogie-side attachment structure 10 can establish connection between the first and second brake-side pipes 26 and 52 and the first and second bogie-side connection ports 13 and 18 of the bogie-side attachment structure 10. In this manner, the first and second brake-side pipes 26 and 52 can be successfully connected to the first and second bogie-side pipes 16 and 17. The bogie-side pipes can be installed without requiring that the unit brake device 101 be temporarily attached for the purpose of determining the position of the pipes relative to the bogie 5. Accordingly, the unit brake device 101 can be mounted in a simplified manner.
(2-2) The attaching surface S1 where the bogie-side attachment structure 10 and the upper brake-side attachment structure 60 are attached may be at a different level than the connecting surface S2 where the first bogie-side connection port 13 and the first brake-side connection port 61 are connected, and than the connecting surface S2 where the second bogie-side connection port 18 and the second brake-side connection port 62 are connected. If such is the case, any manufacturing errors can compromise the air tightness between the first and second bogie-side connection ports 13 and 18 and the first and second brake-side connection ports 61 and 62. According to the second embodiment, the attaching surface S1 is flush with the connecting surfaces S2. Manufacturing errors may occur but do not impair the air tightness between the bogie-side connection ports 13 and 18 and the brake-side connection ports 61 and 62.
(2-3) The first and second brake-side connection ports 61 and 62 are provided in the portion that projects laterally from the body 31. This facilitates handling of the first and second brake-side pipes 26 and 52.
(2-4) The body 31 includes the pipe holder 25 for securing the first and second brake-side pipes 26 and 52. The first and second brake-side pipes 26 and 52 are secured on the body 31, rather than on the air brake cylinder 20 and spring brake cylinder 50. This means that the first and second brake-side pipes 26 and 52 are secured at a site at a short distance from the first and second brake-side connection ports 61 and 62. The first and second brake-side pipes 26 and 52 can be stably supported.

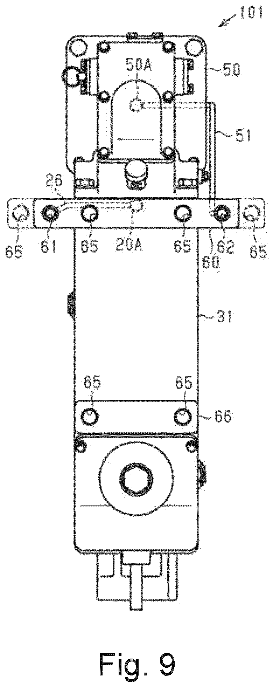

As shown in Fig. 9, the upper brake-side attachment structure 60 may have the second brake-side connection port 62 in a portion that projects laterally in the opposite direction to the projecting portion having the first brake-side connection port 61 (to the right side). The upper brake-side attachment structure 60 projects laterally from the body 31 in the opposite directions. The left projecting portion of the upper brake-side attachment structure 60 is connected to the first brake-side connection port 61. The right projecting portion of the upper brake-side attachment structure 60 is connected to the second brake-side connection port 62. The second brake-side pipe 52 extends along the lateral surface close to the second brake-side connection port 62. A pipe holder securing the second brake-side pipe 52 is fixedly attached onto the spring brake cylinder 50.

According to the above, the first bogie-side pipe 16 connected to the first brake-side pipe 26 can be arranged and secured at the same height as the second bogie-side pipe 17 connected to the second brake-side pipe 52.

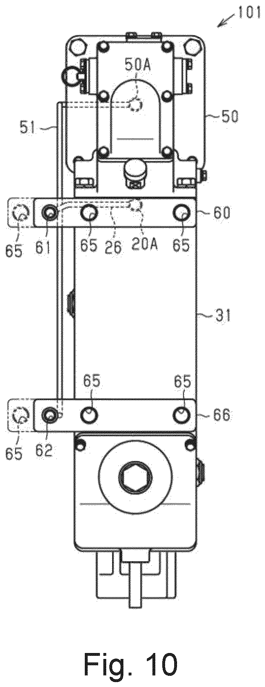

As shown in Fig. 10, the lower brake-side attachment structure 66 may include the second brake-side connection port 62 in a portion that projects laterally in the same direction (to the left side) as the projecting portion of the upper brake-side attachment structure 60 having the first brake-side connection port 61. The lower brake-side attachment structure 66 projects laterally from the body 31. The left projecting portion of the upper brake-side attachment structure 60 has the first brake-side connection port 61. The left projecting portion of the lower brake-side attachment structure 66 has the second brake-side connection port 62. The second brake-side pipe 52 extends along the lateral surface close to the second brake-side connection port 62. The second brake-side pipe 52 is secured by the pipe holder 25.

According to the above, the first and second brake-side pipes 26 and 52 can be collectively arranged on the same lateral surface of the unit brake device 100. The upper and lower brake-side attachment structures 60 and 66 can respectively establish connection with the first and second brake-side pipes 26 and 52.

### <Third Embodiment>

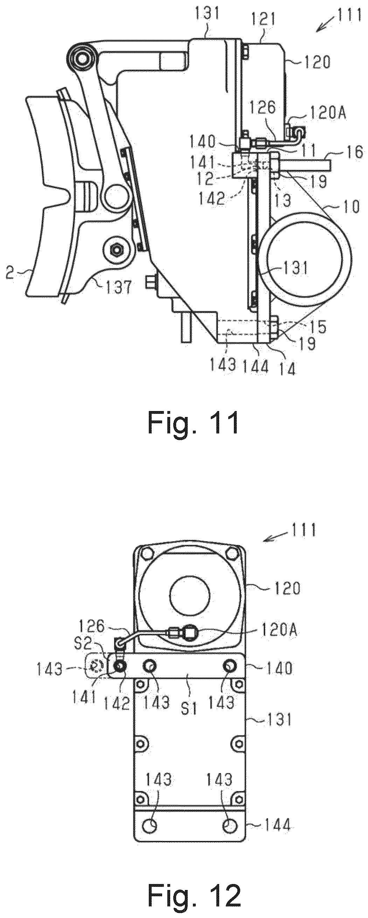

With reference to Figs. 11 and 12, the following now describes a unit brake device according to a third embodiment. The third embodiment is different from the first embodiment in that the unit brake device has the air inlet of the air brake cylinder on the rear side. The following description will be focused on the differences between the first and third embodiments.

### <Unit Brake Device 111>

As shown in Fig 11, the unit brake device 111 includes an air brake cylinder 120 for outputting a brake force by means of air. The unit brake device 111 includes a transmission drive unit 130 for transmitting the brake force output from the air brake cylinder 120 to a shoe head 137. The transmission drive unit 130 has a hollow body 131.

### <Air Brake Cylinder 120>

The air brake cylinder 120 includes a cylinder 121 having a cylindrical shape and a bottom. The cylinder 121 is connected to the right side of the body 131. The bottom of the cylinder 121 (shown on the right side) has an air inlet 120A through which compressed air is fed into the cylinder 121. The air inlet 120A is provided on the rear side of the unit brake device 111. As the compressed air is fed to the cylinder 121, the brake force is output.

### <Bogie-Side Attachment Structure 10>

On the transverse beam 7 of the bogie 5, a bogie-side pipe 16 is fixedly attached to feed compressed air from an air source. The unit brake device 111 includes a bogie-side attachment structure 10 to be fixedly attached onto the bogie 5. The body 131 is attached onto the bogie-side attachment structure 10. The bogie-side attachment structure 10 includes an upper attachment plate 11 and a lower attachment plate 14. The upper attachment plate 11 of the bogie-side attachment structure 10 has two upper bolt holes 12 and a bogie-side connection port 13. The upper bolt holes 12 can receive bolts 19. The bogie-side connection port 13 of the bogie-side attachment structure 10 is connected to the bogie-side pipe 16. The lower attachment plate 14 of the bogie-side attachment structure 10 has two lower bolt holes 15. The lower bolt holes 15 can receive bolts 19. The upper and lower attachment plates 11 and 14 may constitute a single piece or separate pieces as long as they can be fixed onto the bogie 5.

### <Brake-side pipe 126>

As shown in Fig 12, the unit brake device 111 includes a brake-side pipe 126. The brake-side pipe 126 connects the air inlet 120A of the air brake cylinder 120 to an upper brake-side attachment structure 140. The brake-side pipe 126 is fixedly attached onto the body 131 such that it can connect the air inlet 120A to the bogie-side connection port 13 upon attaching the body 131 onto the bogie-side attachment structure 10. The brake-side pipe 126 is held at two points, namely, the air inlet 120A and the upper brake-side attachment structure 140. No pipe holder is required as there is only a short distance between the air inlet 120A and the upper brake-side attachment structure 140.

### <Upper Brake-Side Attachment Structure 140>

The body 131 has the upper brake-side attachment structure 140 to which the bogie-side attachment structure 10 may be attached. The upper brake-side attachment structure 140 has a brake-side connection port 141. The brake-side connection port 141 has an annular ring gasket 142. The ring gasket 142 protrudes beyond the surface of the upper brake-side attachment structure 140 and is to be squashed when the upper brake-side attachment structure 140 is attached onto the bogie-side attachment structure 10. The brake-side connection port 141 connects the bogie-side connection port 13 and the brake-side pipe 126.

The upper brake-side attachment structure 140 has two threaded holes 143. Bolts 19 can be tightened into the threaded holes 143. The brake-side connection port 141 is provided in a portion of the upper brake-side attachment structure 140 that projects laterally (to the left) from the body 131. The upper brake-side attachment structure 140 projects laterally from the body 131. The projecting portion has the brake-side connection port 141. The body 131 has a lower brake-side attachment structure 144. The lower brake-side attachment structure 144 has two threaded holes 143.

An attaching surface S1 where the bogie-side attachment structure 10 and the upper brake-side attachment structure 140 are attached is flush with a connecting surface S2 where the bogie-side connection port 13 and the brake-side connection port 141 are connected. The attaching surface S1 is where the threaded holes 143 of the upper brake-side attachment structure 140 are provided. The connecting surface S2 is where the brake-side connection port 141 of the upper brake-side attachment structure 140 is provided. The attaching surface S1 and connecting surface S2 are part of the same surface of the upper brake-side attachment structure 140.

### <Operation>

The following now describes how the above-described unit brake device 111 is mounted, with reference to Fig. 11.

As shown in Fig. 11, the bogie-side attachment structure 10 is fixedly attached onto the transverse beam 7 of the bogie 5. The upper attachment plate 11 of the bogie-side attachment structure 10 has the bogie-side connection port 13. The bogie-side connection port 13 is connected to the bogie-side pipe 16. The position of the bogie-side pipe 16 is determined independently from how the unit brake device 111 is mounted.

The unit brake device 111 is mounted onto the bogie-side attachment structure 10. While the bogie-side attachment structure 10 is fixedly attached onto the bogie 5, the body 131 is mounted onto the bogie-side attachment structure 10. The threaded holes 143 of the upper brake-side attachment structure 140 are aligned with the upper bolt holes 12 of the upper attachment plate 11 of the bogie-side attachment structure 10, and the threaded holes 143 of the lower brake-side attachment structure 144 are aligned with the lower bolt holes 15 of the lower attachment plate 14 of the bogie-side attachment structure 10. The bolts 19 are inserted into the upper bolt holes 12 from the rear side of the bogie-side attachment structure 10 and tightened into the threaded holes 143 of the upper brake-side attachment structure 140. The bolts 19 are inserted into the lower bolt holes 15 from the rear side of the bogie-side attachment structure 10 and tightened into the threaded holes 143 of the lower brake-side attachment structure 144.

With the body 131 being attached onto the bogie-side attachment structure 10, the ring gasket 142 of the brake-side connection port 141 is pressed against the bogie-side connection port 13, so that tight seal can be established between the brake-side connection port 141 and the bogie-side connection port 13. The brake-side pipe 126 thus connects the air inlet 120A of the air brake cylinder 120 to the bogie-side connection port 13. Being connected to the bogie-side connection port 13, the brake-side pipe 126 can constitute the pipe of the unit brake device 111 as long as the bogie-side pipe 16 is provided on the bogie-side attachment structure 10. No pipe needs to be fixed onto the side frames 6 of the bogie 5.

Advantageous effects of the third embodiment will be now described.
(3-1) As the body 131 is attached onto the bogie-side attachment structure 10, the brake-side pipe 126, which is fixedly attached onto the body 131 and connected to the air inlet 120A of the air brake cylinder 120, can establish connection with the bogie-side connection port 13 of the bogie-side attachment structure 10. Therefore, it is only the bogie-side attachment structure 10 that needs to be fixedly attached onto the bogie 5 in order to place the bogie-side connection port 13, to which the bogie-side pipe 16 is connected, at a fixed position relative to the bogie 5. The present embodiment eliminates the need of attaching the entire unit brake device 111 onto the bogie 5. Attaching the body 131 onto the bogie-side attachment structure 10 can establish connection between the brake-side pipe 126 and the bogie-side connection port 13 of the bogie-side attachment structure 10. In this manner, the brake-side pipe 126 can be successfully connected to the bogie-side pipe 16. The bogie-side pipe can be installed without requiring that the unit brake device 111 be temporarily attached for the purpose of determining the position of the pipe relative to the bogie 5. Accordingly, the unit brake device 111 can be mounted in a simplified manner.
(3-2) The attaching surface S1 where the bogie-side attachment structure 10 and the upper brake-side attachment structure 140 are attached may be at a different level than the connecting surface S2 where the bogie-side connection port 13 and the brake-side connection port 141 are connected. If such is the case, any manufacturing errors can compromise the air tightness at the connection ports. According to the third embodiment, the attaching surface S1 is flush with the connecting surface S2. Manufacturing errors may occur but do not impair the air tightness between the connection ports.
(3-3) The brake-side connection port 141 is provided in the portion of the upper brake-side attachment structure 140 that projects laterally from the body 131. This facilitates handling of the brake-side pipe 126.

### <Other Embodiments>

The foregoing embodiments can be modified as described below. The above embodiments and the following modifications can be implemented in combination to the extent where they are technically consistent with each other.

The pressing unit relating to the above-described embodiments is configured to press the shoe head using the force fed from the brake cylinder via the brake lever. The pressing unit, however, may be embodied without the lever mechanism including the brake lever. In this case, the pressing unit is configured to press the shoe head directly using the force from the brake cylinder.

According to the foregoing embodiments, the brake-side pipe 26 is provided as a separate component and outside the air brake cylinder 20. The brake-side pipe 26 may be, however, integrated with and provided inside the air brake cylinder 20. For example, casting may be employed to make an internal pipe as part of the air brake cylinder 20 and body 31.

According to the above-described embodiments, the body 31 includes the pipe holder 25 for securing the brake-side pipe 26. The pipe holder 25, however, may be excluded as long as the brake-side pipe 26 can be held by the air inlet 20A and upper brake-side attachment structure 40.

The foregoing embodiments may include another threaded hole 43, 65 (143), as shown in Figs. 5, 8, 9, 10 and 12. The additional threaded hole 43, 65 (143) is positioned in the portion of the upper brake-side attachment structure 40, 60 (140) that laterally projects from the body 31 (131) and outside the brake-side connection port 41, 61 (141). This additional threaded hole 43, 65 (143) may be used to secure the upper brake-side attachment structure 40, 60 (140). In this case, the threaded holes 43, 65 (143) sandwich the brake-side connection port 41, 61 (141). The brake-side connection port 41, 61 (141) can be sealed more air-tightly.

According to the foregoing embodiments, the brake-side connection port 41, 61 (141) is provided in the portion of the upper brake-side attachment structure 40, 60 (140) that projects laterally from the body 31 (131). The upper brake-side attachment structure 40, 60 (140), however, may have no portion that projects laterally from the body 31 (131). The brake-side connection port 41, 61 (141) may be provided between the two threaded holes 43, 65 (143) in the upper brake-side attachment structure 40, 60 (140). Since the threaded holes 43, 65 (143) sandwich the brake-side connection port 41, 61 (141), the brake-side connection port 41, 61 (141) can be sealed more air-tightly.

The foregoing embodiments may be modified such that the brake-side connection port 41, 61 (141) may be provided in a portion of the upper brake-side attachment structure 40, 60 (140) that projects upward or downward relative to the threaded holes 43, 65 (143).

According to the above-described embodiments, the attaching surface S1 where the bogie-side attachment structure 10 and the upper brake-side attachment structure 40, 60 (140) are attached is flush with the connecting surface S2 where the bogie-side connection port 13 and the brake-side connection port 41, 61 (141) are connected. The attaching surface S1 may be, however, at a different level than the connecting surface S2, so as to form an uneven surface.

The foregoing embodiments include a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

- S1: attaching surface

- S2: connecting surface
- 1: unit brake device
- 2: brake shoe
- 3: wheel
- 3A: tread
- 5: bogie
- 6: side frames
- 7: transverse beam
- 10: bogie-side attachment structure
- 11: upper attachment plate
- 12: upper bolt hole
- 13: bogie-side connection port, first bogie-side connection port
- 14: lower attachment plate
- 15: lower bolt hole
- 16: bogie-side pipe, first bogie-side pipe
- 17: second bogie-side pipe
- 18: second bogie-side connection port
- 19: bolt
- 20: air brake cylinder
- 20A: air inlet
- 21: cylinder
- 21A: working chamber
- 22: spring
- 23: piston
- 23A: connecting pin
- 25: pipe holder
- 26: brake-side pipe, first brake-side pipe
- 30: transmission drive unit
- 31: body
- 31A: retaining portion
- 31B: coupling pin
- 32: brake lever
- 32A: spherical through hole
- 33: fulcrum pin
- 34: spherical bearing
- 35: collet
- 36: push rod
- 36A: coupling pin
- 37: shoe head
- 38: hanger
- 40: upper brake-side attachment structure
- 41: brake-side connection port
- 42: ring gasket
- 43: threaded hole
- 44: lower brake-side attachment structure
- 50: spring brake cylinder
- 50A: air inlet
- 51: cylinder
- 52: second brake-side pipe
- 60: upper brake-side attachment structure
- 61: first brake-side connection port
- 62: second brake-side connection port
- 63: ring gasket
- 64: ring gasket
- 65: threaded hole
- 66: lower brake-side attachment structure
- 101: unit brake device
- 111: unit brake device
- 120: air brake cylinder
- 120A: air inlet
- 126: brake-side pipe
- 131: body
- 137: shoe head
- 140: upper brake-side attachment structure
- 141: brake-side connection port
- 142: ring gasket
- 143: threaded hole
- 144: lower brake-side attachment structure

## Claims

1. A unit brake device (1, 101, 111) comprising:
a brake cylinder (20, 50) configured to be driven by compressed air fed through a bogie-side pipe (16, 17) fixedly attached onto a bogie (5);
a pressing unit configured to be driven by the brake cylinder (20, 50) and to press a brake shoe (2) against a tread (3A) of a wheel (3) of the bogie (5);
a body (31, 131) covering the pressing unit;
a bogie-side attachment structure (10) to which the body (31, 131) is to be attached with the bogie-side attachment structure (10) being fixedly attached onto the bogie, the bogie-side attachment structure (10) having a bogie-side connection port (13, 18) to which the bogie-side pipe (16, 17) is connected; and
a brake-side pipe (26, 52) configured to establish connection between an air inlet (20A, 50A, 120A) of the brake cylinder (20, 50) and the bogie-side connection port (13, 18),
wherein the brake-side pipe (26, 52) is fixedly attached onto the body (31, 131) such that the brake-side pipe (26, 52) establishes the connection between the air inlet (20A, 50A, 120A) and the bogie-side connection port (13, 18) upon attaching the body (31, 131) onto the bogie-side attachment structure (10).

2. The unit brake device (1, 101, 111) of claim 1,
wherein the body (31, 131) has a brake-side attachment structure (40, 60, 140) to which the bogie-side attachment structure (10) is to be attached,
wherein the brake-side attachment structure (40, 60, 140) has a brake-side connection port (41, 61, 141) for establishing connection between the bogie-side connection port (13, 18) and the brake-side pipe (26, 52), and
wherein an attaching surface (S1) where the bogie-side attachment structure (10) and the brake-side attachment structure (40, 60, 140) are to be attached is flush with a connecting surface (S2) where the bogie-side connection port (13, 18) and the brake-side connection port (41, 61, 141) are to be connected.

3. The unit brake device (1, 101, 111) of claim 2, wherein the brake-side connection port (41, 61, 141) is provided in a portion of the brake-side attachment structure (40, 60, 140) that projects laterally from the body (31, 131).

4. The unit brake device (1, 101, 111) of claim 2, wherein the body (31, 131) includes a pipe holder (25) securing the brake-side pipe (26, 52).

5. The unit brake device (101) of any one of claims 1 to 4,
wherein the brake cylinder (20, 50) includes a service brake cylinder (20) and a parking brake cylinder (50),
wherein the bogie-side pipe (16, 17) includes:
a bogie-side service brake pipe (16) through which compressed air is fed to the service brake cylinder (20); and
a bogie-side parking brake pipe (17) through which compressed air is fed to the parking brake cylinder (50),
wherein the bogie-side attachment structure (10) includes:
a service brake connection port (13) to which the bogie-side service brake pipe (16) is connected; and
a parking brake connection port (18) to which the bogie-side parking brake pipe (17) is connected,
wherein the brake-side pipe (26, 52) includes:
a service-brake pipe (26) for establishing connection between an air inlet (20A) of the service brake cylinder (20) and a connection port (13) of the bogie-side service brake pipe (16); and
a parking-brake pipe (52) for establishing connection between an air inlet (50A) of the parking brake cylinder (50) and a connection port (18) of the bogie-side parking brake pipe (17).

6. A unit brake device (1, 101, 111) comprising:
a brake cylinder (20, 50) configured to be driven by compressed air fed through a bogie-side pipe (16, 17) fixedly attached onto a bogie (5) ;
a pressing unit configured to be driven by the brake cylinder (20, 50) and to press a brake shoe (2) against a tread (3A) of a wheel (3) of the bogie (5);
a body (31, 131) covering the pressing unit; and
a brake-side pipe (26, 52) for establishing connection between an air inlet (20A, 50A, 120A) of the brake cylinder (20, 50) and a bogie-side connection port (13, 18) to which the bogie-side pipe (16, 17) is connected,
wherein the brake-side pipe (26, 52) is fixedly attached onto the body (31, 131).
